# FASCICULE DE BREVET EUROPEEN

(11) **EP 4 259 492 B1**
(45) Date de publication et mention de la délivrance du brevet: **29.01.2025**
(21) Numéro de dépôt: 21815251.0
(22) Date de dépôt: 09.11.2021
(51) Int. Cl.: B60R 22/48

(54) **PROCÉDÉ DE PILOTAGE D'UN DISPOSITIF D'ALERTE DE NON BOUCLAGE DE CEINTURE DE SÉCURITÉ**
VERFAHREN ZUR STEUERUNG EINER ENTKUPPELTEN SICHERHEITSGURT-WARNVORRICHTUNG
METHOD FOR CONTROLLING AN UNBUCKLED SEATBELT WARNING DEVICE

(30) Priorité: 14.12.2020 FR 2013200
(43) Date de publication de la demande: 18.10.2023
(73) Titulaire: Stellantis Auto SAS, 78300 Poissy (FR)
(72) Inventeur: ZAIDI, Fares, 78340 LES CLAYES SOUS BOIS (FR); FERON, Stephane, 92350 LE PLESSIS ROBINSON (FR); LANTIN, Regis, 78117 TOUSSUS LE NOBLE (FR)
(74) Mandataire: ESIP
(86) Numéro de dépôt international: PCT/FR2021/051977
(87) Numéro de publication internationale: WO 2022/129718

(56) Documents cités:
- EP-A1- 1 640 226
- US-A1- 2009 132 128

## Description

### [Domaine technique]

La présente invention concerne d'une manière générale la problématique de la sécurité dans les véhicules automobiles. Elle vise en particulier les dispositifs d'alerte de non bouclage des ceintures de sécurité implantés dans les véhicules automobiles.

### [Technique antérieure]

La plupart des véhicules automobiles intègrent un dispositif d'alerte permettant d'informer les passagers, et surtout le conducteur, du non bouclage des ceintures de sécurité, en particulier de celles des places arrière où se trouvent souvent assis des enfants.

Un tel dispositif d'alerte selon le préambule de la revendication indépendante 1, décrit par exemple dans le document EP 1 640 226 A1, comporte classiquement :
- des moyens de détection aptes à détecter l'état de bouclage ou de non bouclage de chacune des ceintures de sécurité des sièges du véhicule automobile ;
- des moyens d'alerte visuels comprenant un panneau indicateur présentant une pluralité de témoins lumineux de non bouclage des ceintures de sécurité associés chacun à un siège correspondant ;
- des moyens d'alerte sonore comprenant un émetteur acoustique apte à générer un signal d'alerte sonore dans l'habitacle ; et
- une unité de commande apte à piloter les moyens d'alerte visuels et sonores en fonction des données transmises par les moyens de détection.

L'unité de commande est généralement configurée de sorte que la détection, par les moyens de détection, d'un débouclage de la ceinture de sécurité de l'un des sièges du véhicule pendant la phase de roulage du véhicule à une vitesse supérieure à un seuil de vitesse prédéfini, entraîne l'émission d'une alerte visuelle et sonore dans l'habitacle du véhicule pendant une période prédéterminée, cette alerte visuelle et sonore s'interrompant dès que le passager concerné reboucle sa ceinture de sécurité.

Particulièrement irritante pour les oreilles des passagers du véhicule, l'émission dans l'habitacle d'une telle alerte sonore, dont l'intensité croit généralement pendant la sa période d'émission, s'avère en pratique suffisamment persuasive pour entrainer un rebouclage rapide de la ceinture de sécurité en question.

Une telle logique de fonctionnement peut cependant conduire à l'émission d'une alerte alors que la sécurité des passagers n'est pourtant pas remise en cause (ces derniers ayant tous leur ceinture bouclée).

Tel est notamment le cas lorsque l'un des passagers change de siège durant la phase de roulage du véhicule à une vitesse supérieure au seuil de vitesse prédéfini (par exemple, en passant du siège latéral gauche au siège central ou au siège latéral droite d'une même rangée de sièges).

En effet, pour effectuer ce changement de siège, ce passager va devoir déboucler la ceinture de sécurité du siège qu'il occupe afin de pouvoir se déplacer vers le siège de destination, ce qui va entrainer l'émission de l'alerte visuelle et sonore dans l'habitacle du véhicule durant l'intégralité de la période prédéterminée, même si dans l'intervalle ce passager a bouclé la ceinture de sécurité du siège de destination sur lequel il vient de s'assoir de sorte à se trouver à nouveau en situation de sécurité.

### [Exposé de l'invention]

La présente invention vise donc à améliorer la situation.

Elle propose à cet effet un procédé de pilotage d'un dispositif d'alerte de non bouclage de ceinture de sécurité dans un véhicule, comportant une étape d'émission d'une première alerte dans l'habitacle dudit véhicule pendant une première période prédéterminée en cas de détection, durant une phase de roulage dudit véhicule à une vitesse supérieure ou égale à une vitesse seuil prédéfinie, du débouclage de la ceinture de sécurité d'un siège dudit véhicule, ladite première alerte étant désactivée avant le terme de ladite première période prédéterminée en cas de détection du rebouclage de la ceinture dudit siège ; caractérisé en ce que ladite première alerte est également désactivée avant le terme de ladite première période prédéterminée en cas de détection, avant le terme d'une seconde période prédéterminée inférieure ou égale à ladite première période prédéterminée, du bouclage de la ceinture de sécurité d'un autre siège dudit véhicule situé sur la même rangée de sièges que ledit siège.

Le procédé de pilotage selon l'invention permet ainsi d'éviter inutilement la poursuite jusqu'à son terme de l'émission d'une telle alerte de non bouclage de ceinture de sécurité particulièrement anxiogène et perturbante pour les passagers du véhicule (et en particulier le conducteur) dès lors que ces derniers se trouvent dans une situation de sécurité dans laquelle les ceintures des sièges qu'ils occupent sont toutes attachées.

Selon des caractéristiques préférées dudit procédé de pilotage selon l'invention :
- la détection, avant le terme de la seconde période prédéterminée du bouclage de la ceinture de sécurité d'un siège situé sur la même rangée de sièges que ledit siège, entraine également l'émission d'une notification textuelle au conducteur sur un écran d'affichage dudit véhicule pour lui indiquer qu'un passager a changé de siège ;
- la détection du débouclage de la ceinture de sécurité dudit siège entraine également l'émission d'une notification textuelle au conducteur sur un écran d'affichage dudit véhicule pour lui indiquer qu'un passager a débouclé sa ceinture ;
- ladite notification se présente sous la forme d'une fenêtre de type « pop-up » s'affichant pendant quelques secondes ;
- ladite seconde période prédéterminée est comprise entre 10 et 20 secondes ;
- ladite première période prédéterminée est comprise entre 100 et 200 secondes ;
- ledit seuil de vitesse prédéfini est compris entre 10 et 30 km/h ;
- ladite première alerte se traduit par l'allumage clignotant d'un témoin lumineux correspondant audit siège dont la ceinture de sécurité vient d'être débouclée et par l'émission d'un signal sonore d'avertissement dont l'intensité croit sur ladite première période prédéterminée ;
- au terme de ladite première période prédéterminée, ladite première alerte s'arrête et est substituée par l'émission d'une seconde alerte plus douce ; et/ou
- ladite seconde alerte se traduit par l'allumage fixe d'un témoin lumineux correspondant audit siège.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente un schéma fonctionnel d'un dispositif d'alerte de non bouclage des ceintures de sécurité d'un véhicule automobile ;
[Fig 2] est une vue en perspective du boîtier d'affichage des témoins de non bouclage des ceintures de sécurité constituant l'un des éléments principaux d'un dispositif d'alerte de non bouclage des ceintures de sécurité de la figure 1 ; et
[Fig 3] représente un organigramme du procédé de pilotage selon l'invention d'un dispositif d'alerte de non bouclage des ceintures de sécurité.

### [Description détaillée]

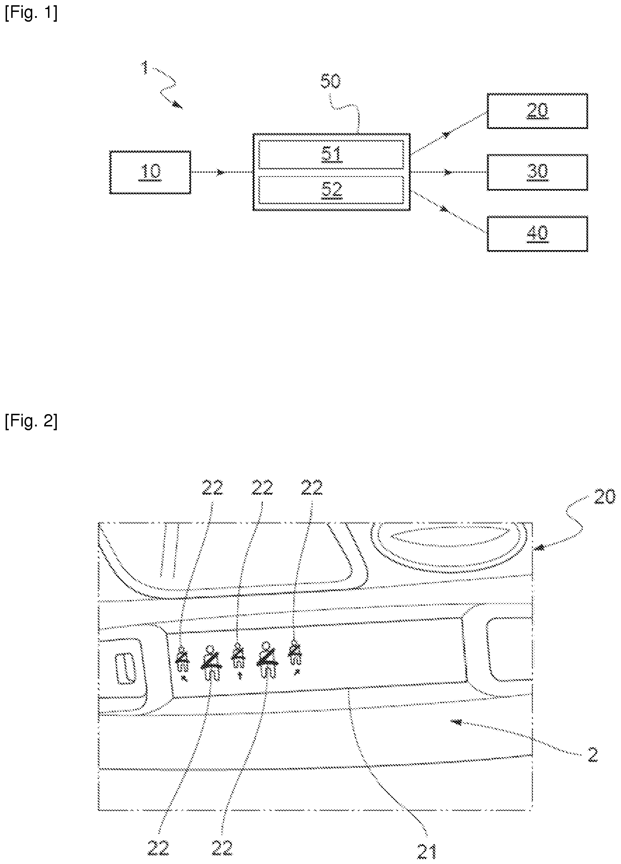

En référence à la figure 1, le dispositif d'alerte de non bouclage des ceintures de sécurité d'un véhicule automobile 1 selon l'invention comporte des moyens de détection 10 aptes à détecter l'état de bouclage ou de non bouclage des ceintures de sécurité des différents sièges du véhicule.

Ces moyens de détection peuvent par exemple des capteurs à champ magnétique intégrés dans les fermoirs des brins boucle des sièges destinés à recevoir chacun de manière amovible le pêne d'une ceinture de sécurité correspondante.

Le dispositif d'alerte 1 comporte également des moyens d'alerte visuels comprenant en l'espèce un boîtier électronique d'affichage des témoins de non bouclage des ceintures de sécurité 20 logé dans un renflement formé dans la portion d'extrémité avant de la console de pavillon 2 du véhicule tel qu'illustré sur la figure 2.

Ce boîtier 20 que l'on dénommera dans la suite de cette description et afin de faciliter la lecture sous le terme « boîtier TNB », comporte un panneau d'affichage rectangulaire 21 réalisé dans un matériau thermoplastique transparent teinté fumé noir tel que par exemple le polycarbonate (PC) ou le polyméthacrylate de méthyle (PMMA) et dont la face avant (orientée à l'opposée des passagers du véhicule) est revêtue d'une peinture opaque noire.

Ce panneau d'affichage 21 intègre une pluralité de témoins lumineux 22 de non bouclage des ceintures de sécurité associés chacun à un siège correspondant du véhicule.

Ces témoins lumineux 22 se présentent sous la forme de pictogrammes aptes à être éclairés chacun par une diode électroluminescente (LED) correspondante implantée sur une carte à circuits imprimés (PCB) logée dans le boîtier TNB 20.

Ces pictogrammes sont réalisés de préférence par grattage laser de la couche de peinture noire recouvrant la face avant du panneau 21 et représentant chacun un passager assis sur un siège et attaché à ce dernier par une ceinture de sécurité.

En variante, le boîtier TNB intégrant le panneau d'affichage des témoins lumineux peut être implanté dans un autre endroit du véhicule et notamment dans tableau de bord.

On peut également envisager la présence de deux boîtiers TNB redondants, agencés respectivement dans la console de pavillon et sur le tableau de bord de sorte à assurer une visibilité optimum des témoins lumineux par l'ensemble des passagers du véhicule.

Les témoins lumineux peuvent également se présenter sous des formes différentes, par exemple de simples points lumineux associés chacun à un siège du véhicule.

Les moyens d'alerte visuels comportent également de manière avantageuse un écran d'affichage électronique 30 apte à diffuser des notifications textuelles à destination du conducteur, cet écran étant par exemple constitué par celui du dispositif d'info-divertissement du véhicule.

Le dispositif d'alerte 1 comporte en outre des moyens d'alerte sonores comprenant un émetteur acoustique 40 apte à générer un signal sonore dans l'habitacle du véhicule.

Cet émetteur 40, par exemple de type sirène, peut être propre au dispositif selon l'invention, mais est de préférence partagé avec d'autres dispositifs d'alerte présents sur le véhicule afin de réduire les coûts de revient.

Ce signal sonore est avantageusement différencié en fréquence et/ou en amplitude vis-à-vis des autres signaux sonores pouvant être également émis par le véhicule afin qu'il soit aisément identifiable par les passagers.

Le dispositif d'alerte 1 selon l'invention comporte enfin une unité de commande 50, constituée avantageusement par le boîtier de servitude intelligent (BSI) du véhicule, et reliée notamment par un réseau de communication électrique aux moyens de détection 10 ainsi qu'aux moyens d'alerte visuels 20, 30 et sonore 40.

L'unité de commande 50 comporte un calculateur 51 et un module de stockage 52 qui comprend de la mémoire non volatile de type EEPROM ou FLASH et de la mémoire vive.

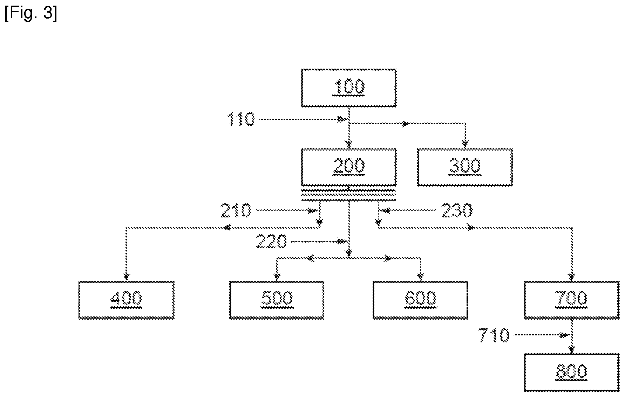

La mémoire non volatile stocke un processus d'alerte de non bouclage de ceinture de sécurité qui est mis en oeuvre dans cette unité 50 et dont l'organigramme est représenté sur la figure 3.

Selon un mode préféré de réalisation, l'ensemble des informations contenues dans cette mémoire non volatile peut être mis à jour par des moyens de communication ou des moyens de lecture d'un support de données.

On va maintenant décrire en détails et à l'appui de l'organigramme de cette figure 3, les différentes étapes de ce procédé.

Celui-ci est initié lorsque le véhicule entre dans une phase de roulage dans laquelle il se déplace à une vitesse supérieure ou égale à un seuil de vitesse prédéfini, compris par exemple entre 10 et 30 km/h et avantageusement égal à 20 km/h (étape initiale 100).

Depuis cette phase de roulage, la détection par les moyens de détection 20 d'un débouclage de la ceinture de sécurité de l'un des sièges du véhicule (événement 110) va entrainer l'émission d'une première alerte visuelle et sonore dans l'habitacle du véhicule pendant une première période prédéterminée comprise entre 100 et 200 secondes et avantageusement égale à 120 secondes (étape 200).

Cette première alerte se traduit par l'allumage clignotant du témoin lumineux correspondant au siège dont la ceinture de sécurité vient d'être débouclée, ainsi que par l'émission d'un signal sonore d'avertissement émis par l'émetteur acoustique 30 et dont l'intensité sonore croit sur cette première période prédéterminée.

De manière avantageuse, cette détection, d'un débouclage de la ceinture de sécurité de l'un des sièges du véhicule, entraine également l'émission d'une notification textuelle au conducteur sur l'écran d'affichage électronique 30 pour lui indiquer qu'un passager a débouclé sa ceinture (étape 300).

Cette notification se présente par exemple sous la forme d'une fenêtre de type « pop-up » s'affichant pendant quelques secondes (par exemple, entre 4 et 10 secondes) et comprenant éventuellement un bouton tactile permettant au conducteur d'acquitter sa lecture de sorte à la faire disparaître plus rapidement.

Lorsque les moyens de détection 20 détectent le rebouclage de la ceinture de sécurité du siège concerné avant le terme de cette première période prédéterminée (événement 210), l'unité de commande désactive cette première alerte visuelle et sonore (étape 400).

Selon l'invention et lorsque les moyens de détection 20 détectent le bouclage de la ceinture de sécurité d'un siège situé sur la même rangée de sièges que le siège concerné avant le terme d'une seconde période prédéterminée inférieure à la première période prédéterminée et avantageusement comprise entre 10 et 20 secondes (événement 220), l'unité de commande 50 considère que le passager du siège concerné s'est installé sur un autre siège de la même rangée en ayant bouclé sa ceinture (ce passager étant donc à nouveau en situation de sécurité) et désactive également cette première alerte visuelle et sonore (étape 500).

De manière avantageuse, cette détection, avant le terme de la seconde période prédéterminée du bouclage de la ceinture de sécurité d'un siège situé sur la même rangée de sièges que le siège concerné, entraine également l'émission d'une notification textuelle au conducteur sur l'écran d'affichage électronique 30 pour lui indiquer qu'un passager a changé de siège (étape 600).

Cette notification se présente par exemple sous la forme d'une fenêtre de type « pop-up » s'affichant pendant quelques secondes (par exemple, entre 4 et 10 secondes) et comprenant éventuellement un bouton tactile permettant au conducteur d'acquitter sa lecture de sorte à la faire disparaitre plus rapidement.

Lorsque la première période prédéterminée arrive à son terme (c'est-à-dire en l'absence de la survenance d'un événement 210 ou 220) (événement 230), la première alerte visuelle et sonore s'arrête et est substituée par l'émission d'une seconde alerte plus douce consistant en l'allumage fixe du témoin lumineux correspondant au siège concerné (étape 700).

Cette seconde alerte visuelle ne cesse (étape 800) que lorsque les moyens de détection 20 détectent le rebouclage de la ceinture de sécurité du siège concerné (événement 710).

Selon des variantes de réalisation de l'invention, les première et/ou seconde alertes peuvent présenter des caractéristiques différentes.

On peut également envisager que la seconde période prédéterminée soit égale à la première période prédéterminée de sorte que la première alerte puisse être désactivée pendant toute la durée d'émission de la première alerte dès lors que les moyens de détection détectent le bouclage de la ceinture de sécurité d'un siège situé sur la même rangée de sièges que le siège concerné avant le terme de cette première période prédéterminée.

On rappelle enfin que la présente invention ne se limite pas au mode de réalisation et à ses variantes décrits et représentés, mais qu'elle englobe toute variante d'exécution à la portée de l'homme du métier. !

## Revendications

1. Procédé de pilotage d'un dispositif d'alerte de non bouclage de ceinture de sécurité dans un véhicule, comportant une étape d'émission d'une première alerte dans l'habitacle dudit véhicule (200) pendant une première période prédéterminée en cas de détection, durant une phase de roulage dudit véhicule à une vitesse supérieure ou égale à une vitesse seuil prédéfinie (100), du débouclage de la ceinture de sécurité d'un siège dudit véhicule (110), ladite première alerte étant désactivée avant le terme de ladite première période prédéterminée (400) en cas de détection du rebouclage de la ceinture dudit siège (210) ;
**caractérisé en ce que** ladite première alerte est également désactivée avant le terme de ladite première période prédéterminée (500) en cas de détection, avant le terme d'une seconde période prédéterminée inférieure ou égale à ladite première période prédéterminée, du bouclage de la ceinture de sécurité d'un autre siège dudit véhicule situé sur la même rangée de sièges que ledit siège (220).

2. Procédé de pilotage selon la revendication 1, **caractérisé en ce que** la détection, avant le terme de la seconde période prédéterminée du bouclage de la ceinture de sécurité d'un siège situé sur la même rangée de sièges que ledit siège (220), entraine également l'émission d'une notification textuelle au conducteur sur un écran d'affichage dudit véhicule pour lui indiquer qu'un passager a changé de siège (600).

3. Procédé de pilotage selon l'une des revendications 1 ou 2, **caractérisé en ce que** la détection du débouclage de la ceinture de sécurité dudit siège (110) entraine également l'émission d'une notification textuelle au conducteur sur un écran d'affichage dudit véhicule pour lui indiquer qu'un passager a débouclé sa ceinture (300).

4. Procédé de pilotage selon l'une des revendications 2 ou 3, **caractérisé en ce que** ladite notification se présente sous la forme d'une fenêtre de type « pop-up » s'affichant pendant quelques secondes.

5. Procédé de pilotage selon l'une des revendications 1 à 4, **caractérisé en ce que** ladite seconde période prédéterminée est comprise entre 10 et 20 secondes.

6. Procédé de pilotage selon l'une des revendications 1 à 5, **caractérisé en ce que** ladite première période prédéterminée est comprise entre 100 et 200 secondes.

7. Procédé de pilotage selon l'une des revendications 1 à 6, **caractérisé en ce que** ledit seuil de vitesse prédéfini est compris entre 10 et 30 km/h.

8. Procédé de pilotage selon l'une des revendications 1 à 7, **caractérisé en ce que** ladite première alerte se traduit par l'allumage clignotant d'un témoin lumineux correspondant (22) audit siège dont la ceinture de sécurité vient d'être débouclée et par l'émission d'un signal sonore d'avertissement dont l'intensité croit sur ladite première période prédéterminée.

9. Procédé de pilotage selon l'une des revendications 1 à 8, **caractérisé en ce qu'**au terme de ladite première période prédéterminée, ladite première alerte s'arrête et est substituée par l'émission d'une seconde alerte plus douce (700).

10. Procédé de pilotage selon la revendication 9, **caractérisé en ce que** ladite seconde alerte se traduit par l'allumage fixe d'un témoin lumineux (22) correspondant audit siège.

## Patentansprüche

1. Verfahren zur Steuerung eines Sicherheitsgurtwarnsystems in einem Fahrzeug, umfassend eine Phase des Auslösens eines ersten Alarms im Fahrgastraum des Fahrzeugs (200) während eines anfänglich vorgegebenen Zeitraums für den Fall der Erkennung, während einer Phase, in der das Fahrzeug mit einer Geschwindigkeit größer oder gleich einer vordefinierten Schwellengeschwindigkeit (100) rollt, das Lösen des Sicherheitsgurts eines Sitzes dieses Fahrzeugs (110), wobei der erste Alarm vor Ablauf des ersten vorgegebenen Zeitraums (400) deaktiviert wird, wenn das Lösen des Sicherheitsgurts dieses Sitzes (210) festgestellt wird;
**dadurch gekennzeichnet, dass** der erste Alarm auch vor Ablauf des ersten vorbestimmten Zeitraums (500) deaktiviert wird, wenn vor Ablauf eines zweiten vorbestimmten Zeitraums, der kleiner oder gleich diesem ersten vorbestimmten Zeitraum ist, festgestellt wird, dass der Sicherheitsgurt eines anderen Sitzes dieses Fahrzeugs angelegt wird, der sich in derselben Sitzreihe wie dieser Sitz (220) befindet.

2. Kontrollverfahren nach Anspruch 1, **dadurch gekennzeichnet, dass** die Erkennung vor Ablauf des zweiten vorgegebenen Zeitraums des Anlegens des Sicherheitsgurts eines Sitzes, der sich in derselben Sitzreihe wie der Sitz (220) befindet, auch dazu führt, dass dem Fahrer auf einem Bildschirm des Fahrzeugs eine Textbenachrichtigung ausgegeben wird, um anzuzeigen, dass ein Beifahrer den Sitz (600) gewechselt hat.

3. Verfahren zum Pilotieren nach einem der Ansprüche 1 oder 2, **dadurch gekennzeichnet, dass** die Erkennung des Lösens des Sicherheitsgurts des Sitzes (110) auch dazu führt, dass dem Fahrer auf einem Bildschirm des Fahrzeugs eine Textbenachrichtigung ausgegeben wird, um anzuzeigen, dass ein Passagier seinen Sicherheitsgurt (300) gelöst hat.

4. Fahrverfahren nach einem der Ansprüche 2 oder 3, **dadurch gekennzeichnet, dass** die Benachrichtigung in Form eines Pop-up-Fensters für einige Sekunden angezeigt wird.

5. Verfahren zur Kontrolle nach einem der Ansprüche 1 bis 4, **dadurch gekennzeichnet, dass** die zweite vorgegebene Periode zwischen 10 und 20 Sekunden liegt.

6. Verfahren zur Steuerung nach einem der Ansprüche 1 bis 5, **dadurch gekennzeichnet, dass** die erste vorgegebene Periode zwischen 100 und 200 Sekunden liegt.

7. Verfahren zur Steuerung nach einem der Ansprüche 1 bis 6, **dadurch gekennzeichnet, dass** die vordefinierte Geschwindigkeitsschwelle zwischen 10 und 30 km/h liegt.

8. Verfahren zur Steuerung nach einem der Ansprüche 1 bis 7, **dadurch gekennzeichnet, dass** der erste Alarm das Aufleuchten einer Warnleuchte entsprechend (22) des Sitzes bewirkt, dessen Sicherheitsgurt gerade gelöst wurde, und durch die Aussendung eines akustischen Warnsignals, dessen Intensität über den ersten vorgegebenen Zeitraum zunimmt.

9. Verfahren zur Steuerung nach einem der Ansprüche 1 bis 8, **dadurch gekennzeichnet, dass** am Ende des ersten vorgegebenen Zeitraums der erste Alarm stoppt und durch das Ausgeben eines zweiten, weicheren Alarms (700) ersetzt wird.

10. Steuerungsverfahren nach Anspruch 9, **dadurch gekennzeichnet, dass** der zweite Alarm das feste Aufleuchten einer dem Sitz entsprechenden Warnleuchte (22) bewirkt,

## Claims

1. Method for controlling a seat belt warning system in a vehicle, comprising a stage of issuing a first alert in the passenger compartment of said vehicle (200) during an initial predetermined period in the event of detection, during a phase of taxiing said vehicle at a speed greater than or equal to a predefined threshold speed (100), the unbuckling of the seat belt of a seat of that vehicle (110), said first alert being deactivated before the end of the said first predetermined period (400) in the event of detection of the unbuckling of the seat belt of that seat (210);
**characterised in that** said first alert is also deactivated before the end of said first predetermined period (500) in the event of detection, before the end of a second predetermined period less than or equal to said first predetermined period, of the fastening of the seat belt of another seat of that vehicle located in the same row of seats as said seat (220).

2. A method of control according to claim 1, **characterized in that** the detection, before the end of the second predetermined period of the fastening of the seat belt of a seat located in the same row of seats as said seat (220), also results in the issuance of a text notification to the driver on a display screen of said vehicle to indicate that a passenger has changed seats (600).

3. A method of piloting according to one of claims 1 or 2, **characterized in that** the detection of the unbuckling of the seat belt of said seat (110) also results in the issuance of a text notification to the driver on a display screen of said vehicle to indicate that a passenger has unbuckled his seat belt (300).

4. A method of driving according to one of claims 2 or 3, **characterized in that** said notification is in the form of a pop-up window displayed for a few seconds.

5. A method of controlling according to one of claims 1 to 4, **characterised in that** said second predetermined period is between 10 and 20 seconds.

6. A method of controlling according to one of claims 1 to 5, **characterized in that** said first predetermined period is between 100 and 200 seconds.

7. Method of control according to one of claims 1 to 6, **characterized in that** said predefined speed threshold is between 10 and 30 km/h.

8. Method of control according to one of claims 1 to 7, **characterized in that** said first alert results in the flashing illumination of a warning light corresponding to (22) said seat whose seat belt has just been unbuckled and by the emission of an audible warning signal whose intensity increases over said first predetermined period.

9. A method of control according to one of claims 1 to 8, **characterized in that** at the end of said first predetermined period, said first alert stops and is replaced by the emission of a second, softer alert (700).

10. A control method according to claim 9, **characterized in that** said second alert results in the fixed illumination of a warning light (22) corresponding to said seat.
